# FASCICULE DE BREVET EUROPEEN

(11) **EP 0 524 033 B1**
(45) Date de publication et mention de la délivrance du brevet: **21.12.1994**
(21) Numéro de dépôt: 92401429.3
(22) Date de dépôt: 26.05.1992
(51) Int. Cl.: B60T 13/567

(54) **Servofrein à dépression**
Unterdruckbremskraftverstärker
Vacuum brake booster

(30) Priorité: 16.07.1991 FR 9108942
(43) Date de publication de la demande: 20.01.1993
(73) Titulaire: ALLIEDSIGNAL EUROPE SERVICES TECHNIQUES, 93700 Drancy (FR)
(72) Inventeur: Moinard, Patrice, BENDIX EUROPE SERVICES, F-93700 Drancy (FR); Castel, Philippe, BENDIX EUROPE SERVICES, F-93700 Drancy (FR)
(74) Mandataire: Bentz, Jean-Paul

(56) Documents cités:
- EP-A- 0 106 723
- US-A- 4 186 650

## Description

La présente invention concerne les servofreins à dépression tels qu'on les utilise pour l'assistance au freinage sur les véhicules automobiles.

De façon classique, ces servofreins comprennent un boîtier constitué par une coquille à laquelle est fixé un maître-cylindre et par un couvercle.

A l'intérieur de ce boîtier, un piston sépare de façon étanche deux chambres intérieures et un moyen de valve assure le fonctionnement du servofrein.

Un ressort précontraint de rappel du piston vers sa position de repos sensiblement en butée contre le couvercle, est disposé entre le piston et la coquille.

Notamment lorsque le couvercle n'a pas besoin d'être serti à la coquille ou bien lors de l'assemblage des composants, il est souhaitable que le ressort puisse rester compressé et ne se détende pas complètement. Ceci permet en effet de n'avoir pas à exercer un effort de compression de l'ensemble trop important lors de la mise en place des composants.

Le document US-A-3 137 361 décrit un servofrein du type précité dans lequel la coquille est fixée au couvercle au moyen de vis de manière à pouvoir être ouvert en cas de nécessité.

Le document EP-A-0 106 723 décrit un servomoteur pourvu d'un rouleau de renvoi pour une bande élastique fixé entre une paroi de fond du boîtier et un bras de la structure de piston. Cette bande permet de réduire le diamètre du servomoteur et de limiter les risques de déformation de la paroi de fond.

Toutefois, lors de l'ouverture du boîtier, ou lors de la remise en place du couvercle, l'effet du ressort de rappel peut poser des problèmes graves.

La présente invention a pour but d'obvier à cet inconvénient.

Selon l'invention, le ressort comporte un moyen permettant d'en limiter l'extension lorsque la coquille et le couvercle ne sont pas fixés l'un à l'autre.

De préférence, ce moyen est constitué par une coupelle disposée entre la coquille et l'extrémité du ressort en regard de la coquille, et par une pluralité de bretelles de longueur maximale déterminée reliant la coupelle au piston ; de façon favorable, le moyen comporte une seconde coupelle disposée entre le piston et l'extrémité du ressort en regard du piston, les bretelles reliant les coupelles l'une à l'autre.

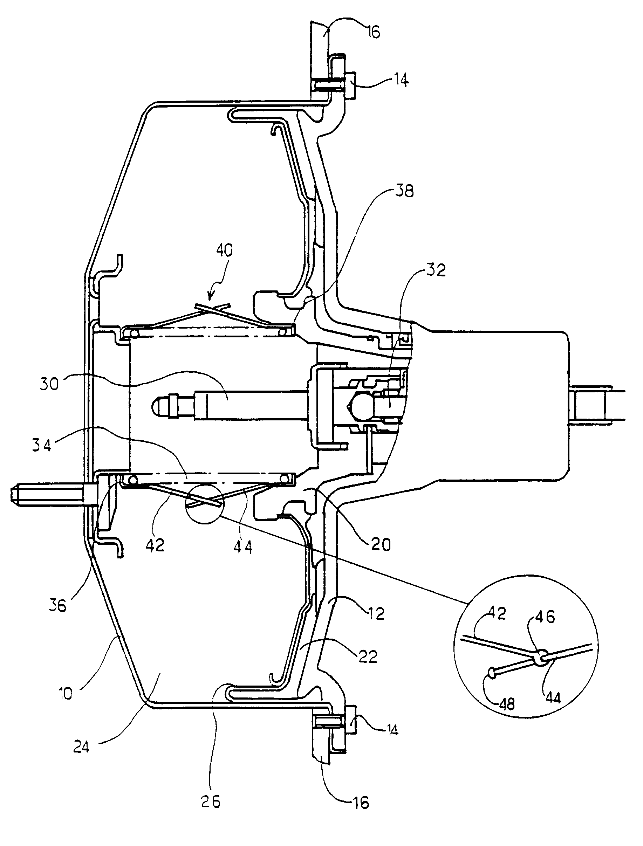

L'invention sera mieux comprise, et d'autres buts avantages et caractéristiques apparaîtront plus clairement à la lecture de la description qui suit d'un mode préféré de réalisation et à laquelle est jointe une planche de dessin sur laquelle la Figure unique représente schématiquement en coupe un servofrein conforme à la présente invention.

En référence maintenant à cette Figure unique, on a représenté un servofrein dont les éléments du boîtier ne sont pas sertis l'un à l'autre et qui peut donc être ouvert, par exemple pour maintenance.

Le boîtier du servofrein comprend donc, de manière classique une coquille 10 et un couvercle 12 reliés l'un à l'autre au moyen d'un jeu de vis 14 qui sert en outre à la fixation de l'ensemble sur le tablier 16 séparant le compartiment moteur de l'habitacle du véhicule.

Un piston 20 sépare le volume intérieur du boîtier en deux chambres 22 et 24, une membrane déroulante 26 assurant l'étanchéité de cette séparation.

Le piston 20 comporte un poussoir 30 pouvant actionner un maître-cylindre (non représenté) fixé à la coquille 10.

Le servofrein est actionné par un moyen de valve classique commandé par une tige 32 reliée à la pédale de frein.

Un ressort précontraint 34 rappelle le piston en position de repos sensiblement en butée contre le couvercle 12. A cet effet, il est disposé dans la chambre 24 entre la coquille 10 et le piston 20.

Il est prévu un moyen permettant de limiter l'extension du ressort 34 lorsque la coquille 10 et le couvercle 12 ne sont pas fixés l'un à l'autre, notamment pendant l'assemblage du servofrein ou en cas d'intervention sur le servofrein après montage sur le véhicule.

Sur l'ensemble représenté, ce moyen est constitué par une première coupelle 36 disposée entre la coquille 10 et l'extrémité du ressort 34 en regard de la coquille, une seconde coupelle 38 disposée entre le piston 20 et l'extrémité du ressort 34 en regard du piston, et un jeu de bretelles 40 présentant une longueur maximale déterminée reliant les coupelles 36 et 38 l'une à l'autre.

Ces bretelles 40 sont, de préférence, articulées de manière à s'écarter du ressort 34 lorsque ce dernier est comprimé, c'est-à-dire à ne pas gêner le fonctionnement du servofrein et ne pas limiter la course du piston 20 lorsque le servofrein est actionné.

Chaque bretelle 40 est ici constituée de deux brins 42,44. Un premier brin 42 a une extrémité solidaire de la première coupelle 36 et une ouverture 46 est pratiquée dans son autre extrémité. Le second brin 44 a une extrémité solidaire de la seconde coupelle 38 et porte, à son autre extrémité, une protubérance 48 de dimension supérieure à celle de l'ouverture 46.

Cette protubérance 48 et l'ouverture 46 forment un élément de verrouillage lorsque le second brin 44 coulisse dans l'ouverture 46 du premier brin.

De façon favorable, coupelle et brins associés sont réalisés en une unique pièce.

## Revendications

1. Servofrein à dépression, comprenant dans un boîtier constitué d'une coquille (10) et d'un couvercle (12), un piston (20) séparant de façon étanche deux chambres internes (22,24), un moyen de valve commandé par une tige (32) faisant saillie dudit boîtier pour assurer le fonctionnement dudit servofrein, et un ressort précontraint (34) de rappel dudit piston (20) vers sa position de repos sensiblement en butée contre ledit couvercle (12), ledit ressort (34) prenant appui sur ladite coquille (10) et comportant un moyen qui en limite l'extension lorsque ladite coquille (10) et ledit couvercle (12) ne sont pas fixés l'un à l'autre, caractérisé en ce que ledit moyen est constitué par une coupelle (36) disposée entre ladite coquille (10) et l'extrémité dudit ressort (34) en regard de ladite coquille (10), et par une pluralité de bretelles (40) de longueur maximale déterminée reliant ladite coupelle (36) audit piston (20).

2. Servofrein à dépression selon la revendication 1 caractérisé en ce que ledit moyen comporte une seconde coupelle (38) disposée entre ledit piston (20) et l'extrémité du ressort (34) en regard dudit piston (20), lesdites bretelles (40) reliant lesdites coupelles (36,38) l'une à l'autre.

3. Servofrein à dépression selon les revendications 1 ou 2 caractérisé en ce que lesdites bretelles (40) sont articulées de manière à s'écarter dudit ressort (34) lorsque ce dernier est compresse.

4. Servofrein à dépression selon la revendication 3 caractérisé en ce que lesdites bretelles (40) sont constituées chacune par un premier brin (42) dont une extrémité est fixé à ladite coupelle (36) et par un second brin (44) dont une extrémité est fixée audit piston (20) ou à ladite seconde coupelle (38), une ouverture (46) étant pratiquée à l'autre extrémité de l'un (42) desdits premier et second brins, tandis que l'autre extrémité de l'autre (44) desdits premier et second brins est pourvue d'une protubérance (48), l'autre desdits premier et second brins coulissant librement dans ladite ouverture (46) jusqu'à arrêt par coopération de ladite ouverture (46) et de ladite protubérance (48).

## Claims

1. Vacuum-operated servo-brake comprising, in a casing consisting of a shell (10) and a cover (12), a piston (20) separating leaktightly two inner chambers (22, 24), a valve means controlled by a rod (32) projecting from said casing in order to ensure the operation of said servo-brake, and a prestressed spring (34) for returning said piston (20) to its rest position substantially abutting said cover (12), said spring (34) bearing on said shell (10), and comprising a means enabling its extension to be limited when said shell (10) and said cover (12) are not fixed to each other characterized in that said means consists of a collar (36) arranged between said shell (10) and that end of said spring (34) opposite said shell (10), and of a plurality of links (40) of a specified maximum length connecting said collar (36) to said piston (20).

2. Vacuum-operated servo-brake according to Claim 1, characterized in that said means comprises a second collar (38) arranged between said piston (20) and that end of the spring (34) opposite said piston (20), said links (40) connecting said collars (36, 38) to each other.

3. Vacuum-operated servo-brake according to Claims 1 or 2, characterized in that said links (40) are articulated so as to move away from said spring (34) when the latter is compressed.

4. Vacuum-operated servo-brake according to Claim 3, characterized in that said links (40) each consist of a first strand-part (42), one end of which is fixed to said collar (36), and of a second strand-part (44), one end of which is fixed to said piston (20) or to said second collar (38), an aperture (46) being made at the other end of one (42) of said first and second strand-parts, whilst the other end of the other (44) of said first and second strand-parts is provided with a protuberance (48), the other of said first and second strand-parts sliding freely in said aperture (46) until halted by interaction of said aperture (46) and said protuberance (48).

## Patentansprüche

1. Unterdruckservobremse, die in einem Gehäuse aus einer Schale (10) und einer Abdeckung (12) bestehenden Gehäuse einen Kolben (20) enthält, der in dichter Weise zwei Innenkammern (22, 24) voneinander trennt, sowie ein Ventilmittel, das von einer Stange (32) gesteuert ist, die aus dem Gehäuse hervorsteht, um die Betätigung des Servomotors zu ermöglichen, und eine vorgespannten Feder (34) zum Zurückstellen des Kolbens (20) in seine Ruheposition im wesentlichen in Anlage an der Abdeckung (12), wobei die Feder (34) an der - Schale (10) anliegt und ein Mittel aufweist, welches ihre Längenzunahme begrenzt, wenn die Schale (10) und die Abdeckung (12) nicht aneinander befestigt sind, dadurch gekennzeichnet, daß das Mittel durch eine Kapsel (36) gebildet ist, die zwischen der Schale (10) und dem der Schale (10) gegenüberliegenden Ende der Feder (34) angeordnet ist, sowie durch mehrere Gurte (40) mit bestimmter Maximallänge, welche die Kapsel (36) mit dem Kolben (20) verbinden.

2. Unterdruckservobremse nach Anspruch 1, dadurch gekennzeichnet, daß das Mittel eine zweite Kapsel (38) enthält, die zwischen dem Kolben (20) und dem dem Kolben (20) gegenüberliegenden Ende der Feder (34) angeordnet ist, wobei die Gurte (40) die Kapseln (36, 38) miteinander verbinden.

3. Unterdruckservobremse nach Anspruch 1 oder 2, dadurch gekennzeichnet, daß die Gurte (40) so angelenkt sind, daß sie sich von der Feder (34) entfernen, wenn diese zusammengedrückt wird.

4. Unterdruckservobremse nach Anspruch 3, dadurch gekennzeichnet, daß die Gurte (40) jeweils durch einen ersten Steg (42) gebildet sind, von dem ein Ende an der Kapsel (36) befestigt ist, und durch einen zweiten Steg (44), von dem ein Ende an dem Kolben (20) oder an der zweiten Kapsel (38) befestigt ist, wobei an dem anderen Ende von einem (42) der beiden Stege eine Öffnung (46) ausgebildet ist, während das andere Ende des anderen (44) der beiden Stege mit einer Verdickung (48) versehen ist, wobei der andere der beiden Stege frei in der Öffnung (46) gleitet, bis er durch Zusammenwirken der Öffnung (46) mit der Verdickung (48) gestoppt wird.
